# EUROPEAN PATENT APPLICATION

(11) **EP 4 486 004 A1**
(43) Date of publication of application: **01.01.2025**
(21) Application number: 24183307.8
(22) Date of filing: 20.06.2024
(51) Int. Cl.: H04W 36/00, H04W 84/12

(54) **ELECTRONIC APPARATUS, CONTROL METHOD THEREOF, COMPUTER-READABLE STORAGE MEDIUM STORING PROGRAM, AND PROGRAM**

(30) Priority: 30.06.2023 JP 2023108515
(71) Applicant: CANON KABUSHIKI KAISHA, Tokyo 146-8501 (JP)
(72) Inventor: HIRANO, Tsubasa, Tokyo, 146-8501 (JP)
(74) Representative: TBK

(57) **Abstract**

An electronic apparatus (100) includes: a receiving means configured to receive a change request of an access point serving as a connection destination from an access point (101); a setting means configured to set processing based on the change request from the access point (101) to enabled or disabled; and a control means configured to, in response to the setting means setting the processing to disabled, perform control such that a connection to a connected access point (101) is disconnected, the access point (101) is notified of information indicating that the electronic apparatus (100) does not support the change request, and a reconnection to the access point (101) is established.

## Description

### BACKGROUND OF THE INVENTION

### Field of the Invention

The present invention relates to an electronic apparatus connectable with a wireless LAN, a control method thereof, a computer-readable storage medium storing a program, and a program.

### Description of the Related Art

In an extended service set (ESS) constituted by a plurality of access points (AP), there is a technology for dynamically switching a connection destination AP to realize efficient data exchange between an AP and a station (STA). If it is determined that the connection destination AP should be switched based on the congestion of APs to which the STA is connected, availability of other APs, radio wave conditions, and the like, the currently connected AP transmits a request for changing the connected AP, to the STA. Upon receiving the AP change request, the STA switches the connection destination AP in accordance with the request, making it possible to connect to an appropriate AP.

Japanese Patent Laid-Open No. 2021-175068 discloses processing in which a router having an AP function requests a currently connected wireless child device to change the connection destination, as follows. A mobile router (MR 1) that is connectable to a plurality of wireless child devices checks whether or not a wireless child device terminal supports IEEE 802.11v. Whether or not a wireless child device terminal supports IEEE 802. 11v can be determined based on an Association Request frame transmitted when the wireless child device terminal wirelessly connects to the MR 1. If the wireless child device terminal supports IEEE 802. 11v, the MR 1 transmits a basic service set (BSS) transition management (BTM) Request frame to the corresponding wireless child device terminal. In a BSS Transition Candidate List Entries field of the BTM Request frame, the BSSID of a parent router RT 2 is designated as the connection destination. This promotes the wireless child device terminal to switch the connection destination, and the wireless child device terminal switches the connection destination from the MR 1 to the RT 2 in accordance with the received BTM Request frame.

### SUMMARY OF THE INVENTION

The present invention provides an electronic apparatus that changes an access point serving as a connection destination more appropriately, a control method thereof, a computer-readable storage medium storing a program, and a program.

The present invention in its first aspect provides an electronic apparatus as specified in claims 1 to 12.

The present invention in its second aspect provides an electronic apparatus as specified in claims 13.

The present invention in its third aspect provides a method for controlling an electronic apparatus as specified in claims 14.

The present invention in its fourth aspect provides a method for controlling an electronic apparatus as specified in claims 15.

The present invention in its fifth aspect provides a non-transitory computer-readable storage medium storing a program as specified in claims 16.

The present invention in its sixth aspect provides a program as specified in claims 17.

According to the present invention, it is possible to change an access point serving as a connection destination more appropriately.

Further features of the present invention will become apparent from the following description of exemplary embodiments (with reference to the attached drawings).

### BRIEF DESCRIPTION OF THE DRAWINGS

FIG. 1 is a diagram showing a configuration of a system.
FIGS. 2A and 2B are diagrams showing a configuration of an MFP.
FIGS. 3A, 3B, and 3C are diagrams showing an operation display unit of the MFP.
FIGS. 4A and 4B are diagrams showing a configuration of a portable terminal device.
FIG. 5 is a diagram illustrating a configuration of an access point.
FIG. 6 is a sequence diagram illustrating processing based on a connection destination change request from an AP.
FIG. 7 is a flowchart illustrating an operation of the MFP.
FIG. 8 is a diagram showing an example of an Agile Multiband setting screen of the MFP.
FIG. 9 is a flowchart illustrating an operation of the MFP according to a modification.
FIG. 10 is a diagram showing an example of a screen for checking a change in Agile Multiband setting.
FIG. 11 is a flowchart illustrating an operation of the MFP.
FIG. 12 is a flowchart illustrating an operation of the MFP.
FIG. 13 is a diagram showing an example of a screen for checking a change in Agile Multiband setting.
FIGS. 14A and 14B are diagrams showing an example of a data configuration of an Association Request frame.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

A STA may have a state in which no problem occurs even when AP switching is executed, and a state in which a problem may occur if the STA is disconnected from a currently connected AP due to the execution of AP switching. If, in the state in which a problem may occur, the STA receives a connection destination change request (change request of an access point serving as a connection destination) from an AP and switches the connection destination AP in accordance with the request, a problem may occur in the STA.

According to the present disclosure, it is possible to change an access point serving as a connection destination more appropriately.

### (System Configuration)

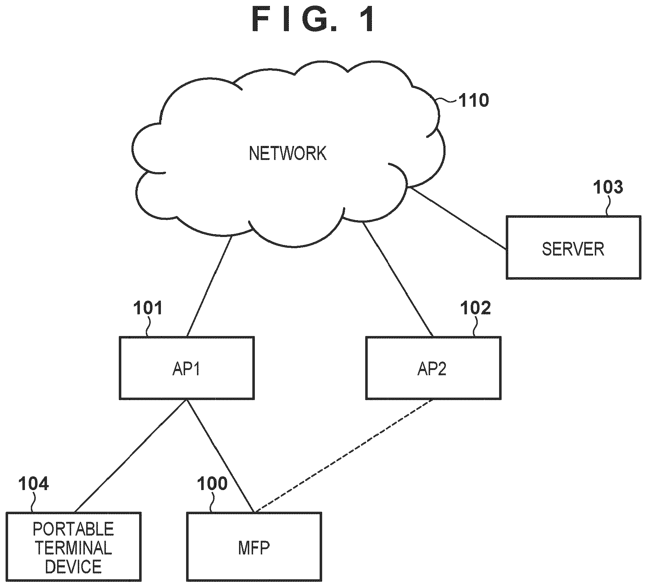

FIG. 1 shows an example of a configuration of a system according to the present embodiment. This system is, in an example, a wireless communication system in which a plurality of communication devices can wirelessly communicate with each other. In the example of FIG. 1, the system includes, as communication devices, a portable terminal device 104; an MFP 100; access points, namely, an AP 101 and an AP 102; a server 103; and a network 110. Note that the AP 101 and the AP 102 may be denoted as "AP 1" and "AP2", respectively. The portable terminal device 104 is a device having a wireless communication function using a wireless LAN or the like. Note that, hereinafter, the wireless LAN may be referred to as "WLAN". The portable terminal device 104 may be a personal information terminal such as a personal digital assistant (PDA), a cellphone (smartphone), a digital camera, a personal computer, or the like.

The MFP 100 is a printer device having a print function and may further have a scan function (scanner), a FAX function, and/or a phone function. Also, the MFP 100 of the present embodiment has a communication function of enabling wireless communication with the portable terminal device 104. Also, the present embodiment will describe an example in which the MFP 100 is used, but some embodiments are not limited to this. Instead of the MFP 100, for example, a device having the communication function, such as a scanner device, a projector, a portable terminal, a smartphone, a note PC, a tablet terminal, a PDA, a digital camera, a music playback device, a television set, and a smart speaker, may be used. Note that MFP is an acronym of "Multi Function Peripheral".

The AP 101 is provided separate from (outside) the portable terminal device 104 and the MFP 100, and functions as a base station device for a WLAN. Communication devices having the WLAN communication function can perform communication in a WLAN infrastructure mode via the AP 101. Note that, hereinafter, an access point may be referred to as "AP". Also, an infrastructure mode may be referred to as "wireless infrastructure mode". The AP 101 performs wireless communication with a (authenticated) communication device that is allowed to connect to the AP 101, and relays wireless communication between the authenticated communication device and another communication device. Also, the AP 101 may be connected to, for example, a wired communication network and may relay communication between a communication device connected to this wired communication network and another communication device wirelessly connected to the AP 101.

The AP 102 has the same function as that of the AP 101, and the MFP 100 switches connection from the AP 101 to the AP 102. The server 103 connects to the MFP 100 via the AP 101 and the network 110 and provides services to the MFP 100 in response to a request from the MFP 100. Here, the network 110 may be the so-called Internet, or may be a network or cellphone network that is closed within a company.

### (External Appearance Configuration of MFP)

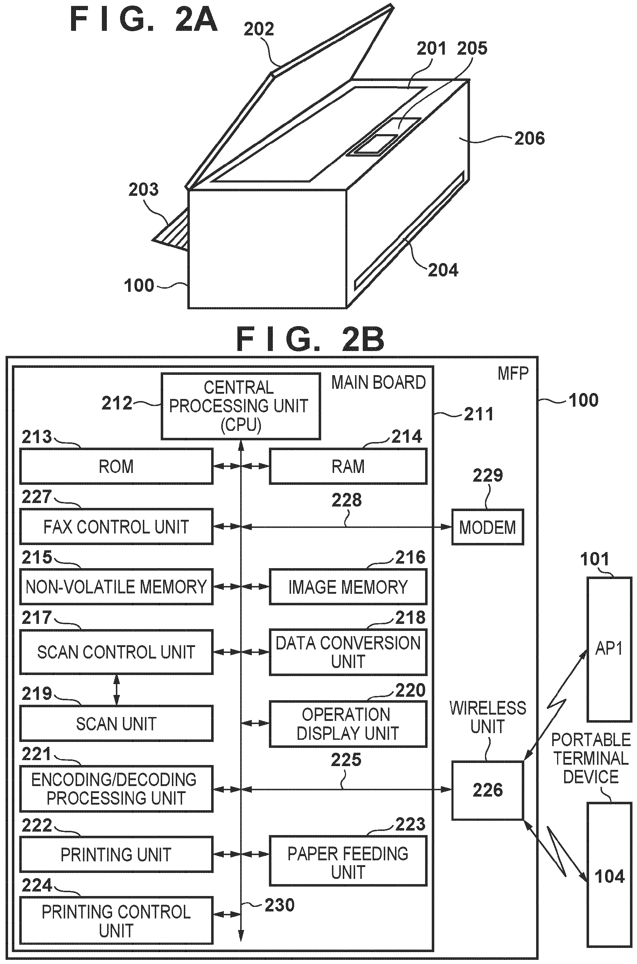

FIG. 2A shows an example of an external appearance configuration of the MFP 100. The MFP 100 includes, for example, a document platform 201, a document lid 202, a print paper insertion port 203, a print paper ejection port 204, and an operation display unit 205. The document platform 201 is a platform on which a scan target document is to be placed. The document lid 202 is a cover that presses a document placed on the document platform 201 or prevents light from a light source for illuminating the document during scanning from leaking outside. The print paper insertion port 203 is an insertion port in which various sizes of paper can be set. The print paper ejection port 204 is an ejection port for ejecting printed paper. Paper set in the print paper insertion port 203 is conveyed one by one to a print unit, where printing is performed, and then the printed paper is ejected from the print paper ejection port 204. The operation display unit 205 includes keys, such as character input keys, cursor keys, decision keys, and cancel keys, as well as LEDs and an LCD, and can accept activation of various functions as the MFP by the user and operation of various settings. Also, the operation display unit 205 may include a touch panel display. The MFP 100 has a wireless communication function with a WLAN and includes a wireless communication antenna 206 for the wireless communication, although the antenna 206 does not need to be externally viewed. The MFP 100, similarly to the portable terminal device 104, can also perform wireless communication in the frequency bands of 2.4 GHz and 5 GHz using a WLAN.

### (Configuration of MFP)

FIG. 2B shows an example of a configuration of the MFP 100. The MFP 100 includes a main unit 211 that performs main control on the MFP 100, and a wireless unit 226, which is a communication module that performs WLAN communication using at least one common antenna. The main unit 211 merely indicates a block which includes functional blocks other than a modem 229 and the wireless unit 266. Also, the MFP 100 includes a modem 229 for performing, for example, wired communication. The main unit 211 includes, for example, a central processing unit (CPU) 212, a ROM 213, a RAM 214, a non-volatile memory 215, an image memory 216, a scan control unit 217, a data conversion unit 218, a scan unit 219, and an encoding/decoding processing unit 221. Also, the main unit 211 includes, for example, a print unit 222, a paper feeding unit 223, a print control unit 224, and an operation display unit 220. The functional units inside the main unit 211 are connected to each other via a system bus 230 managed by the CPU 212. Also, the main unit 211 and the wireless unit 226 are connected to each other via, for example, a dedicated bus 225, and the main unit 211 and the modem 229 are connected to each other via, for example, a bus 228.

The CPU 212 is a system control unit including at least one processor and performs overall control on the MFP 100. The later-described processing of the MFP 100 is realized by the CPU 212 executing programs stored in the ROM 213, in an example. Note that dedicated hardware may be provided for each piece of processing. The ROM 213 stores a control program and an embedded OS program that are executed by the CPU 212, and the like. In the present embodiment, the CPU 212 executes the control programs stored in the ROM 213 under the control of the embedded OS also stored in the ROM 213, thereby performing software control, such as scheduling, task switch, and the like.

The RAM 214 is constituted by an SRAM and the like. The RAM 214 stores data such as program control variables, and data such as setting values registered by a user, and management data of the MFP 100. Also, the RAM 214 may be used as a buffer for various works. The non-volatile memory 215 is constituted by, for example, a memory, such as a flash memory, and continues to store data even when the MFP 100 is turned off. The image memory 216 is constituted by a memory, such as a DRAM. The image memory 216 stores image data received via the wireless unit 226, image data processed by the encoding/decoding processing unit 221, and the like. Note that the memory configuration of the MFP 100 is not limited to the above-described configuration. The data conversion unit 218, for example, analyzes data in various formats and converts image data into print data.

The scan control unit 217 controls the scan unit 219 (e.g., contact image sensor (CIS)) to optically read a document placed on the document platform 201. The scan control unit 217 converts an image obtained by optically scanning the document into electrical image data (image signals), and outputs the converted image data. At this time, the scan control unit 217 may output image data that has been subjected to various image processing, such as binarization and midtone processing.

The operation display unit 220 corresponds to the operation display unit 205, which has been described with reference to FIG. 2A, and is configured to perform display on a display in accordance with display control performed by the CPU 212 and generate signals in response to an acceptance of a user operation, for example.

The encoding/decoding processing unit 221 performs encoding processing and decoding processing, as well as scaling processing, on image data (such as JPEG and PNG) handled by the MFP 100.

The paper feeding unit 223 holds paper for printing. The paper feeding unit 223 can feed set paper under the control of the print control unit 224. The paper feeding unit 223 may include a plurality of paper feeding units to hold multiple types of paper in one device and may perform control as to from which paper feeding unit paper is to be fed under the control of the print control unit 224.

The print control unit 224 performs various image processing, such as smoothing processing, print density correction processing, and color correction, on image data to be printed, and outputs the processed image data to the print unit 222. The print unit 222 can execute, for example, inkjet-recording printing processing, in which ink supplied from an ink tank is ejected from a print head to record an image on a recording medium, such as paper. Note that the print unit 222 may also be configured to execute another type of printing processing, such as electrophotographic printing processing. Also, the print control unit 224 may read information on the print unit 222 on a regular basis and may update status information stored in the RAM 214, the status information including the amount of ink remaining in the ink tank, the state of the print head, and the like.

The wireless unit 226 is a unit capable of providing the WLAN communication function, and can provide, for example, the same function as the mixture of the wireless unit 226 and a WLAN unit 429 of the portable terminal device 104. That is to say, the wireless unit 226 converts data into a packet compliant with WLAN standards and transmits the resulting packet to another device or decodes a packet from another external device into original data, and outputs the resulting data to the CPU 212. The wireless unit 226 can perform communication as a station compatible with the IEEE 802.11 standard series. Specifically, the wireless unit 226 can perform communication as a station compatible with IEEE 802.11a/b/g/n/ac/ax. Hereinafter, the station may also be referred to as "STA". Also, the wireless unit 226 can perform communication as a STA that supports Wi-Fi Agile Multiband.

The wireless unit 226 supports IEEE 802.11ax, that is, Wi-Fi 6, and the MFP 100 can also operate as a STA that supports orthogonal frequency-division multiple access (OFDMA) and target wake time (TWT). Since the wireless unit 226 supports TWT, the data communication timing from a parent device to the STA is adjusted. The wireless unit 226 (MFP 100), which is the STA, shifts the communication function to a sleep mode when there is no need to wait for signal reception. With this, it is possible to suppress the power consumption. The wireless unit 226 also supports Wi-Fi 6E. That is, communication in the 6 GHz band (5.925 GHz to 7.125 GHz) is also possible. The target band that exists in the 5 GHz band and for which dynamic frequency selection (DFS) is performed does not exist in the 6 GHz band. Therefore, communication in the 6 GHz band is expected to be more comfortable, because no communication disconnection due to DFS waiting time occurs.

Note that the portable terminal device 104 and the MFP 100 can perform P2P (WLAN) communication based on WFD, and the wireless unit 226 has a software access point (soft AP) function or a group owner function. That is to say, the wireless unit 226 can establish a network for P2P communication and can determine a channel to be used in the P2P communication.

### (Operation Display Unit of MFP)

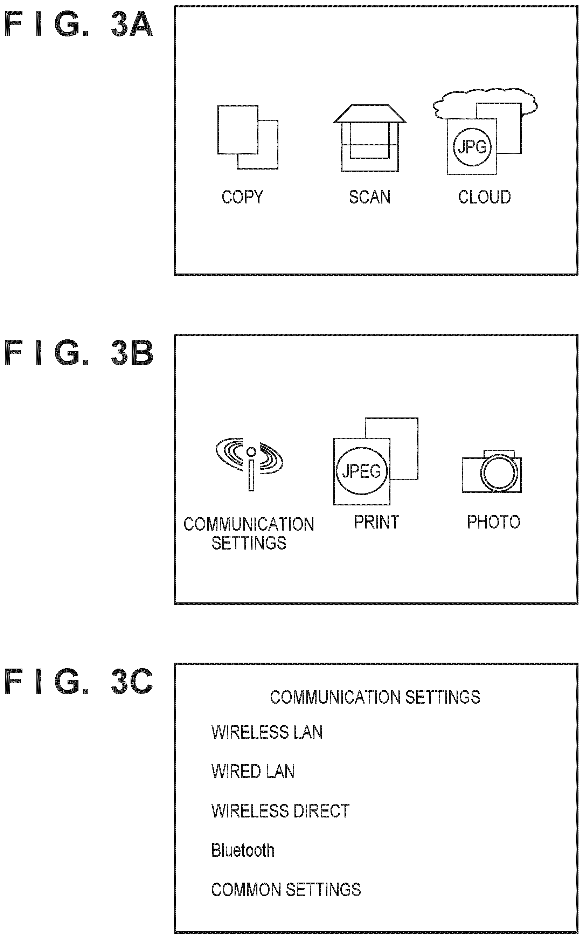

FIGS. 3A to 3C schematically show examples of screen display on a display (touch panel display) included in the operation display unit 220 of the MFP 100. FIG. 3A shows an example of a home screen displayed during a state (idle state or standby state) in which the MFP 100 is turned on but no operation such as printing or scanning is being performed. In FIG. 3A, display items (menu items) that respectively correspond to copy, scanning, and cloud are displayed. Cloud is a menu item relating to a cloud function that uses Internet communication. When one of the menu items is selected by a key operation or a touch panel operation, the MFP 100 can start executing the corresponding setting or function. By accepting a key operation or a touch panel operation on the home screen shown in FIG. 3A, the MFP 100 can seamlessly display a screen different from the screen in FIG. 3A.

FIG. 3B shows an example of display of another part of the home screen and shows a screen that transitions from the state of FIG. 3A by an operation (such as a sliding operation to the left or right) to display another page of the home screen. In FIG. 3B, display items (menu items) that respectively correspond to communication settings, printing, and photos are displayed. When one of the menu items is selected, the function that corresponds to the selected menu item, that is, the print function, the photo function, or communication settings, is executed.

FIG. 3C shows a display example of a menu screen for communication settings displayed when the communication settings is selected on the screen of FIG. 3B. On the menu screen for communication settings, "wireless LAN", "wired LAN", "wireless direct", "Bluetooth", and "common" are displayed as menu items (options). "Wireless LAN", "wired LAN", and "wireless direct" are menu items used when LAN settings are configured, and from these items, setting of wired connection, setting of enabling/disabling a wireless infrastructure mode, setting of enabling/disabling a P2P mode, such as WFD or a soft AP mode, and the like are configured. When the item "wireless LAN" is selected and the wireless LAN is set to enabled by a user operation, the wireless infrastructure mode is enabled. When the item "wireless direct" is selected and the wireless direct is set to enabled by a user operation, the P2P (WLAN) mode is enabled. The common setting menu relating to connection formats is also displayed on this screen. Furthermore, the user can configure, on the screen, settings of a frequency band and a frequency channel for a wireless LAN, and the like.

### (External Appearance Configuration of Portable Terminal Device)

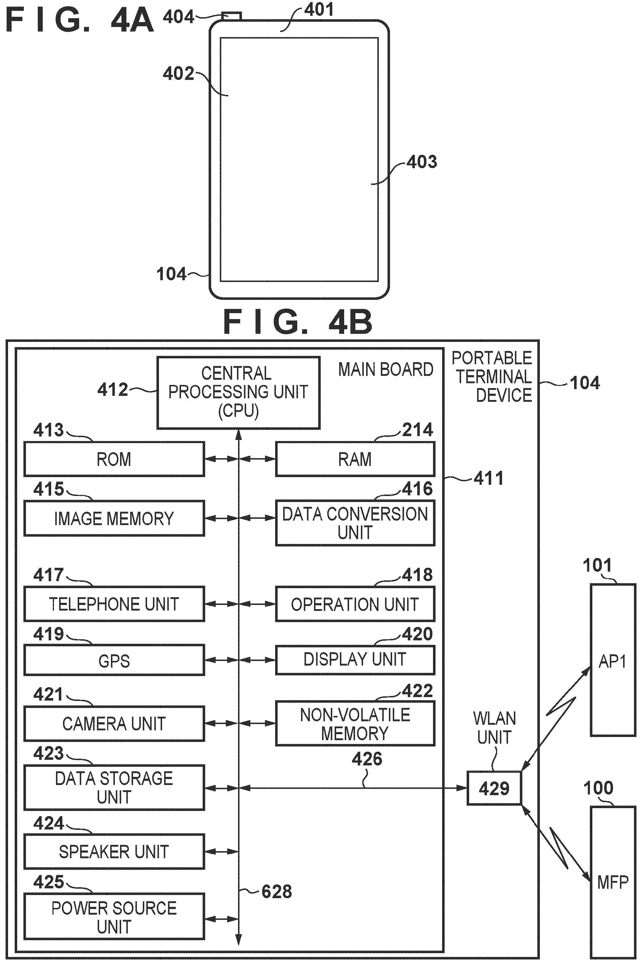

FIG. 4A is a diagram showing an example of an external appearance configuration of the portable terminal device 104. The present embodiment describes, as an example, a case where the portable terminal device 104 is a common type of smartphone. Note that the portable terminal device 104 includes, for example, a display unit 402, an operation unit 403, and a power source key 404. The display unit 402 is a display including, for example, a liquid crystal display (LCD)-type display mechanism. Note that the display unit 402 may display information using, for example, light emitting diodes (LED) or the like. The portable terminal device 104 may also have, in addition to or instead of the display unit 402, a function of outputting information by voice. The operation unit 403 includes physical keys, such as keys and buttons, a touch panel, and the like, for detecting user operations. Note that in the present example, since the information display by the display unit 402 and the reception of user operations by the operation unit 403 are performed using a common touch panel display, the display unit 402 and the operation unit 403 are realized by a single device. In this case, button icons and software keyboards are displayed using the display function of the display unit 402, and the user's touch on those areas is detected by the operation reception function by the operation unit 403. Note that a configuration is also possible in which the display unit 402 and the operation unit 403 are separated, and separate pieces of hardware for display and for operation reception are provided. The power source key 404 is a physical key for accepting user operations to turn on or off the portable terminal device 104.

The portable terminal device 104 includes a WLAN unit 401 that provides a WLAN communication function, although it does not necessarily need to be visible in the external appearance. The WLAN unit 401 is configured to be able to execute data (packet) communication in a WLAN system compatible with, for example, IEEE 802.11 standard series (such as IEEE 802.11a/b/g/n/ac/ax). The WLAN unit 401 can also perform communication as an AP supporting Wi-Fi Agile Multiband. However, some embodiments are not limited to this, and the WLAN unit 401 may also be able to execute communication of a WLAN system that is compatible with another standard. Note that in the present example, the WLAN unit 401 can perform communication in both the frequency bands of 2.4 GHz and 5 GHz. Also, the WLAN unit 401 can execute communication based on WFD, communication in the soft AP mode, communication in the wireless infrastructure mode, and the like. Operations in these modes will be described later.

### (Configuration of Portable Terminal Device)

FIG. 4B shows an example of a configuration of the portable terminal device 104. The portable terminal device 104 includes, in an example, a main unit 411 that performs main control on the portable terminal device 104, and a WLAN unit 429 that performs WLAN communication. The main unit 411 includes, for example, a CPU 412, a ROM 413, a RAM 414, an image memory 415, a data conversion unit 416, a phone unit 417, a GPS 419, a camera unit 421, a non-volatile memory 422, a data storage unit 423, a speaker unit 424, and a power source unit 425. Here, "CPU" is an acronym of Central Processing Unit, "ROM" is an acronym of Read Only Memory, "RAM" is an acronym of Random Access Memory, and "GPS" is an acronym of Global Positioning System. The portable terminal device 104 also includes a display unit 420 and an operation unit 418. The functional units inside the main unit 411 are connected to each other via a system bus 628 managed by the CPU 412. Also, the main unit 411 and the WLAN unit 429 are connected to each other via, for example, a dedicated bus 426.

The CPU 412 is a system control unit that includes at least one processor and performs overall control of the portable terminal device 104. The later-described processing of the portable terminal device 104 is realized by the CPU 412 executing programs stored in the ROM 413, in an example. Note that hardware dedicated for each piece of processing may be provided. The ROM 413 stores a control program and an embedded (OS) program that are executed by the CPU 412, and the like. In the present embodiment, by executing the control programs stored in the ROM 413 under the control of the embedded OS also stored in the ROM 413, the CPU 412 performs software control for scheduling, task switches, and the like.

The RAM 414 is constituted by a static RAM (SRAM) and the like. The RAM 414 stores data such as program control variables, and data such as setting values registered by a user, and management data of the portable terminal device 104. Also, the RAM 414 may be used as a buffer for various works. The image memory 415 is constituted by a memory, such as a dynamic RAM (DRAM). The image memory 415 temporarily stores image data received via the WLAN unit 429 and image data read from the data storage unit 423, for processing by the CPU 412. The non-volatile memory 422 is constituted by a memory, such as a flash memory, for example, and continues to store data even when the portable terminal device 104 is turned off. Note that the memory configuration of the portable terminal device 104 is not limited to the above-described configuration. For example, the image memory 415 and the RAM 414 may be shared, or data backup and the like may be performed using the data storage unit 423. Also, in the present embodiment, a DRAM is exemplified as the image memory 415, but another storage medium, such as a hard disk or a non-volatile memory, may also be used.

The data conversion unit 416 performs analysis of data in various formats and data conversion, such as color conversion and image conversion. The phone unit 417 controls the telephone line and processes voice data input and output via the speaker unit 424 to realize telephone communication. The GPS 419 receives radio waves sent out from satellites and obtains position information of the portable terminal device 104, such as the current latitude and longitude.

The camera unit 421 has a function of electronically recording and encoding images input through a lens. Image data obtained by image capture of the camera unit 421 is stored in the data storage unit 423. The speaker unit 424 performs control for realizing the function of inputting or outputting voice for the telephone function and other functions, such as alarm notification. The power source unit 425 is, for example, a portable battery, and performs control for supplying power to the device. The power source state includes, for example, a dead battery state in which no power remains in the battery, a power off state in which the power source key 404 is not pressed, an activated state in which the device is activated, and a power saving state in which the device is activated but the power is saved.

The display unit 420 corresponds to the display unit 402 described with reference to FIG. 4A, and performs display of various input operations, operation state and status of the MFP 100, and the like, based on the control of the CPU 412. The operation unit 418 corresponds to the operation unit 403 described with reference to FIG. 4A, and performs, upon receiving a user operation, control such as generating an electrical signal corresponding to the operation and outputting the generated electrical signal to the CPU 412, for example.

The portable terminal device 104 performs wireless communication using the WLAN unit 429 to communicate data with another device, such as the MFP 100. The WLAN unit 429 converts data into a packet and transmits the packet to another device. Also, the WLAN unit 429 decodes a packet from another external device into original data, and outputs the original data to the CPU 412. The WLAN unit 429 is a unit for realizing communication compliant with WLAN standards. The WLAN unit 429 can operate in at least two communication modes, in parallel, including the wireless infrastructure mode and the P2P (WLAN) mode. Note that the frequency bands used in these communication modes may be limited by the function and performance of hardware.

### (Configuration of Access Point)

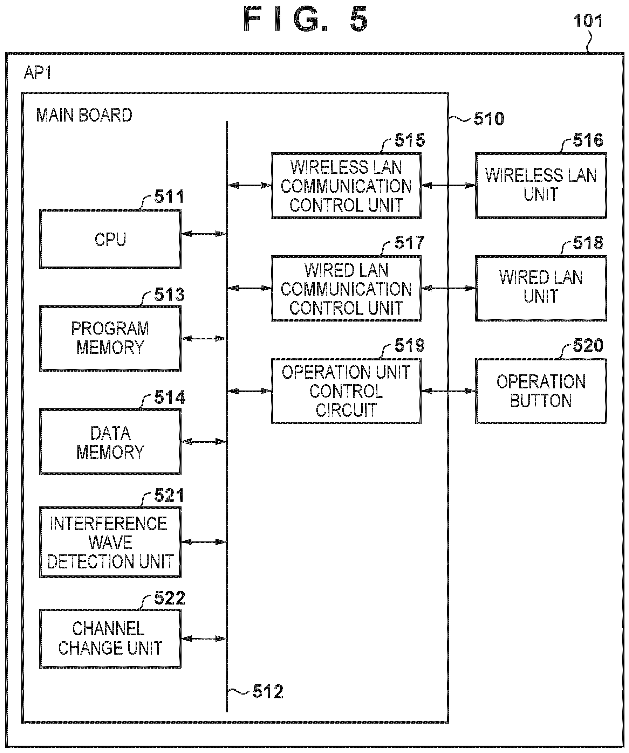

FIG. 5 is a block diagram showing a configuration of the AP 101 having the wireless LAN access point function. The AP 101 includes a main unit 510 that controls the AP 101, a wireless LAN unit 516, a wired LAN unit 518, and an operation button 520.

The CPU 511 in the form of a microprocessor disposed on the main unit 510 operates in accordance with a control program stored in a program memory 513 in the form of a ROM that is connected to the CPU 511 via an internal bus 512, and the content of a data memory 514 in the form of a RAM. The CPU 511 controls the wireless LAN unit 516 through a wireless LAN communication control unit 515 to perform wireless LAN communication with another communication terminal device. Also, the CPU 511 controls the wired LAN unit 518 through a wired LAN communication control unit 517 to perform wired LAN communication with another communication terminal device. By controlling an operation unit control circuit 519, the CPU 511 can accept a user operation made through the operation button 520. The CPU 511 includes at least one processor.

Also, the AP 101 includes an interference wave detection unit 521 and a channel changing unit 522. The interference wave detection unit 521 performs interference wave detection processing while executing wireless communication in a frequency band in which dynamic frequency selection (DFS) is executed. The channel changing unit 522 performs processing for changing a channel to be used, for example, when an interference wave is detected or when an immediate change to an empty channel is needed while wireless communication is being executed in a frequency band in which DFS is executed.

Note that also the AP 102 has the same configuration as the AP 101.

### (P2P Communication Method)

Subsequently, WLAN communication, namely, a P2P (WLAN) communication method, in which devices directly and wirelessly communicate with each other without any intervention of an external access point, will be described schematically. P2P (WLAN) communication can be realized by a plurality of methods, and for example, communication devices that can support a plurality of modes for P2P (WLAN) communication can selectively use any one of the plurality of modes to execute P2P communication (WLAN).

The following two modes are conceivable as the P2P modes:
- Soft AP mode; and
- Wi-Fi Direct (WFD) mode.

Communication devices that can execute P2P communication may be configured to support at least one of these modes. On the other hand, even a communication device that can execute P2P communication does not need to support all these modes but may be configured to support only some of them.

A communication device (for example, the portable terminal device 104) having the WFD communication function calls, upon accepting a user operation via the operation unit thereof, an application for realizing (in some cases, dedicated for) the communication function. Then, the communication device displays a screen of a user interface (UI) provided by this application to prompt a user operation and based on the user operation accepted in response thereto, the communication device can execute WFD communication.

### - Soft AP Mode

In the soft AP mode, a communication device (for example, the portable terminal device 104) operates in the role of a client that requests various services. Another communication device (for example, the MFP 100) operates as a soft AP capable of performing the function of a WLAN AP by software setting. Note that commands and parameters transmitted and received when establishing a wireless connection between a client and a soft AP need only be those specified in Wi-Fi^{®} standards, and thus descriptions thereof are omitted here. Also, the MFP 100 operating in the soft AP mode determines a frequency band and a frequency channel, as the parent station. Therefore, the MFP 100 can select which frequency band to use from 5 GHz and 2.4 GHz and can select which frequency channel to use among the selected frequency band.

### - WFD Mode

The MFP 100 may be configured to be activated in a fixed manner, as a parent station in the WFD mode (Autonomous Group Owner). In this case, GO Negotiation processing for determining the role is not required. Also, in this case, the MFP 100 determines, as the parent station, a frequency band and a frequency channel. Therefore, the MFP 100 can select which frequency band to use from 5 GHz and 2.4 GHz and select which frequency channel to use among the selected frequency band.

### (Wireless Infrastructure Mode)

In the wireless infrastructure mode, communication devices (for example, the portable terminal device 104 and the MFP 100) that communicate with each other are connected to an external AP (for example, the AP 101) that performs overall control on a network, and communication between the communication devices is executed via this AP. In other words, communication between the communication devices is executed via a network established by an external AP. As a result of the portable terminal device 104 and the MFP 100 detecting an AP 101 and each transmitting a connection request to this AP 101, communication in the wireless infrastructure mode between the communication devices via the AP 101 is possible. Note that a plurality of communication devices may be connected to individual APs. In this case, data transfer between the APs enables communication between the communication devices. Commands and parameters transmitted and received during communication between the communication devices need only be those specified in Wi-Fi standards, and thus descriptions thereof are omitted here. Also, in this case, the AP 101 determines a frequency band and a frequency channel. Therefore, the AP 101 can select which frequency band to use from 5 GHz, 2.4 GHz, and 6 GHz, and can select which frequency channel to use among the selected frequency band.

### (Processing In Response To Connection Destination Change Request From AP to STA)

The portable terminal device 104 and the MFP 100 support functions published as Wi-Fi Agile Multiband^{®}. Wi-Fi Agile Multiband is a function that enables selection of an optimal environment according to the changing condition of a Wi-Fi network. Specifically, a STA such as the portable terminal device 104 and the MFP 100, and an AP such as the AP 101 exchange information relating to the network environment using the communication standards of IEEE 802.11 series. With such information exchange, if congestion exists in the network, the AP can guide the STA to another AP, frequency band, or channel, or even another cellular service in some cases (the AP can cause the STA to change the connection destination).

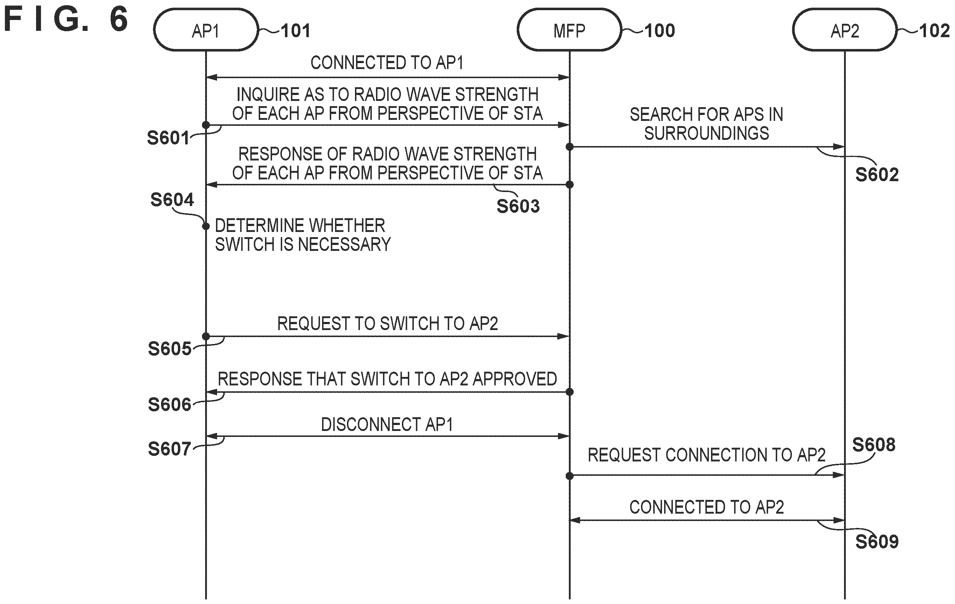

FIG. 6 is a sequence diagram when the MFP 100 changes the connection destination AP from the AP 101 to the AP 102 in response to a connection destination change request (change request of an access point serving as a connection destination) from the AP 101. The processing executed by each of the devices in this sequence is realized by the CPU of the device reading, onto the RAM, various programs stored in the memory such as the ROM included in the device and executing it.

It is assumed that, in the initial state of the processing in FIG. 6, the MFP 100 has established a connection with the AP 101 in the wireless infrastructure mode. It is also assumed that when the MFP 100 has connected to the AP 101 in the wireless infrastructure mode, the AP 101 has acquired information as to whether or not the MFP 100 supports IEEE 802.11v, and when having acquired information indicating that the MFP 100 supports IEEE 802.11v, the AP 101 executes the following processing.

In step S601, the AP 101 transmits, to the MFP 100, an inquiry about (measurement request of) the radio wave strengths of APs located in the surroundings of the MFP 100. The inquiry can be transmitted together with, for example, a beacon frame request or a beacon report request. That is to say, the request can use the mechanism specified by the IEEE 802.11k standard.

In step S602, the MFP 100 receives frames transmitted by the APs located in the surroundings thereof and measures the radio wave strengths of the APs, in response to the request received in step S601. With this, the radio wave strengths of the plurality of APs including the AP 101 and the AP 102 are measured.

In step S603, the MFP 100 transmits a list of the radio wave strengths of the APs located in the surroundings of the MFP 100, measured in step S602, as a response to the request received in step S601. Note that, in addition to or instead of the information measured in step S602, the radio wave strength to be responded may be information stored, for example, in the RAM 214 and the non-volatile memory 215 of the MFP 100. The response is transmitted together with a beacon report or measurement reports, for example.

In step S604, the AP 101 determines whether or not switching the connection destination of the MFP 100 is required based on the congestion situation in the network that the AP101 recognizes, and the radio wave strengths received from the MFP 100 in step S603. Factors based on which the AP 101 determines that switching the connection destination is required include the following: many connection STAs, large amount of communication, other APs that are less congested, presence or absence of interference signals, disabled AP function, and the like. If it is determined that switching the connection destination of the MFP 100 is required, and the SSID, channel, and frequency band of another AP designated as a switching destination of the MFP 100 are determined, the procedure advances to step S605.

In step S605, the AP 101 transmits an AP change request (connection destination switching request) to the MFP 100. The connection destination switching request includes information relating to the SSID, channel, and frequency band of the other AP designated as the switching destination of the MFP 100 that were determined in step S604. Note that there may be cases where a plurality of SSID are designated. The connection destination change request is transmitted as, for example, a BTM Request. That is, a BSS transition management (BTM) Request frame specified by IEEE 802. 11v standards is transmitted. In the example of FIG. 6, it is assumed that the AP 102 is designated as the switching destination included in the connection destination change request.

In step S606, if the MFP 100 complies with the connection destination change request received in step S605, the MFP 100 transmits a response that indicates an approval of switching to the AP 101. If the MFP 100 does not comply with the connection destination change request, the MFP 100 may transmit a refusal to switching as a response. The response is transmitted as a BTM Response. In the example of FIG. 6, it is assumed that a response indicating an approval of switching is transmitted.

In step S607, the AP 101 and the MFP 100 are disconnected from each other in the wireless infrastructure mode.

In step S608, the MFP 100 transmits, to the AP 102, a connection request that requests that the AP 102 designated by the connection destination change request received in step S605 connect to the MFP 100.

With this, in step S609, the connection of the MFP 100 and the AP 102 in the wireless infrastructure mode is established.

Through this mechanism, the MFP 100, which is the STA, can change the connection destination from the AP 101 to the AP 102 in accordance with the connection destination change request from the AP 101 to which the MFP 100 was originally connected. The AP 101 and the AP 102 may be APs that are located at different positions. That is, through the processing in FIG. 6, the MFP 100 can switch the connection destination to another AP located at a position different from the position at which the originally connected AP is located. Also, the original AP and another AP may be APs that support different frequency bands, among a plurality of frequency bands (two or three of 2.4 GHz, 5 GHz, and 6 GHz) provided by the same device. That is, through the processing in FIG. 6, the MFP 100 can switch the frequency band to another frequency band provided by the same device as the originally connected AP. For example, the connection destination can be changed to an AP in 6 GHz band in accordance with the connection destination change request.

Note that the present embodiment describes an example in which a measurement request and a connection destination change request are transmitted from an AP using a mechanism compliant with Wi-Fi Agile Multiband, and the STA responds to these requests, but is not limited to this. The present embodiment is also applicable to a case where the STA responds to the measurement request and the connection destination change request transmitted from the AP using a mechanism different from that in the above-described example, and changes the connection destination AP (switches, deletes, or adds the connection destination AP).

Embodiments are described. Hereinafter, an access point is denoted as "AP", a station is denoted as "STA", Wi-Fi Agile Multiband (registered trademark) is denoted as "Agile Multiband". When the MFP 100 according to the present embodiment is set to accept a connection destination change request from the AP 101, the MFP 100 operates so as not to accept a connection destination change request from the AP 101 if the settings or state of the MFP 100 meet predetermined conditions. In the present embodiment, the case where the MFP 100 is set to accept a connection destination change request refers to a state in which the MFP 100 supports IEEE 802.1 1v and the AP 101 has recognized the Agile Multiband function is enabled.

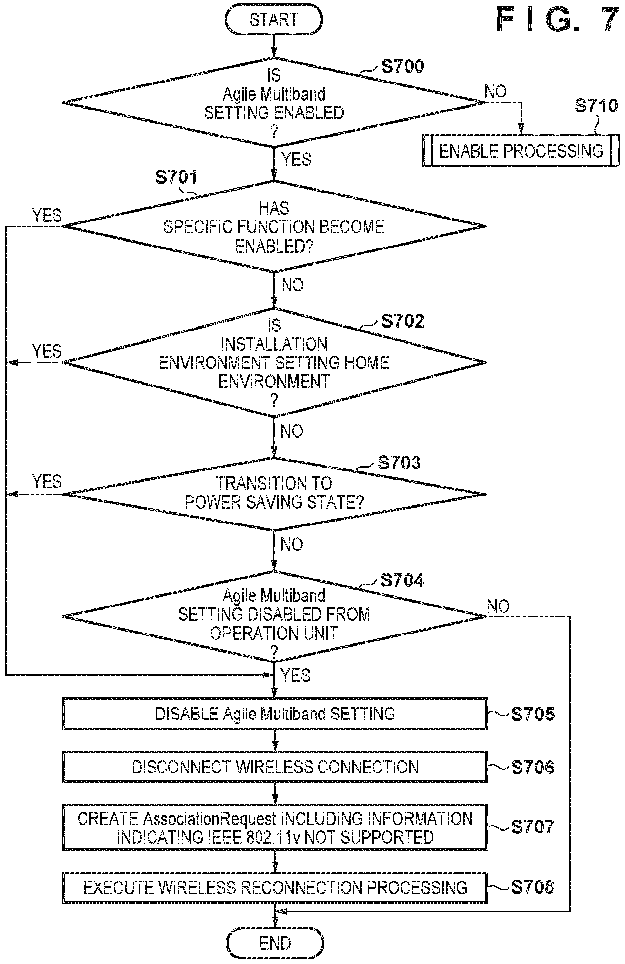

FIG. 7 is a flowchart illustrating operations causing the MFP 100 not to accept a connection destination change request from the AP 101 when the settings or state of the MFP 100 meet predetermined conditions. Note that the processing shown in the flowchart may be realized by the CPU 212 reading, onto the RAM 214, various programs stored in a memory such as the ROM 213 included in the MFP 100 and executing it. The processing shown in FIG. 7 is executed in a repeated manner during the operation of the MFP 100.

The MFP 100 internally has, as Agile Multiband settings, a setting value that indicates whether Agile Multiband is enabled or disabled. When the setting value indicates that Agile Multiband is enabled, it is possible to change the AP based on Agile Multiband, and when the setting value indicates that Agile Multiband is disabled, changing of the AP based on Agile Multiband is not performed. Note that setting value is stored in the non-volatile memory 215 and can be rewritten and read out by the CPU 212 as needed.

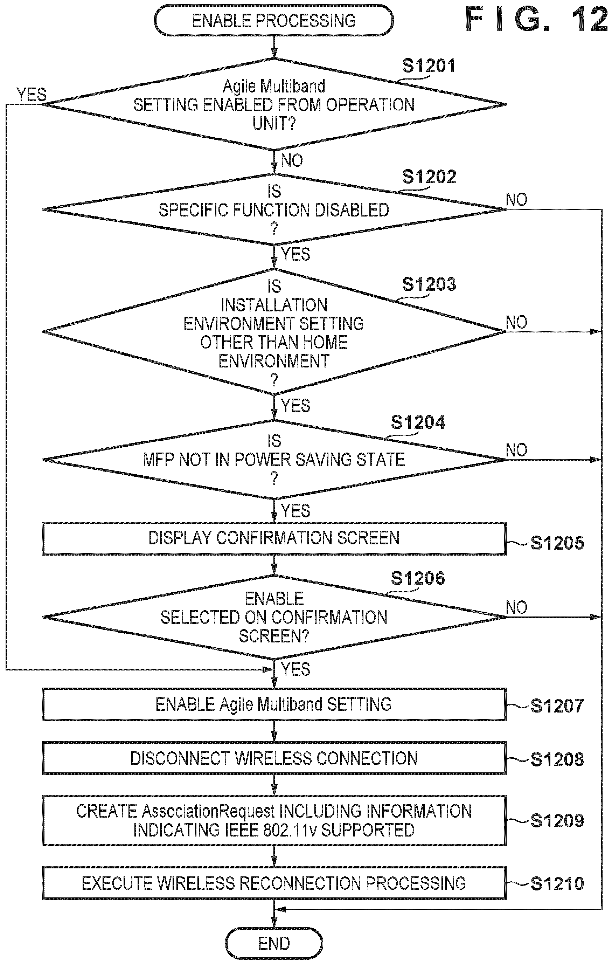

At the start of the processing of FIG. 7, the MFP 100 is assumed to have established a wireless connection with the AP 101 in the wireless infrastructure mode. First, in step S700, the CPU 212 determines whether or not the Agile Multiband setting is enabled. When the Agile Multiband setting is enabled, the MFP 100 transmits information that it supports IEEE 802.11v to the AP 101 when establishing a wireless connection. With this, the AP 101 recognizes that the MFP 100 can execute the function that corresponds to Agile Multiband. If it is determined by the CPU 212 that the Agile Multiband setting is enabled (YES in step S700), the processing advances to step S701, whereas if it is determined that the Agile Multiband setting is disabled (NO in step S700), the processing advances to step S710. In step S710, the CPU 212 performs enabling processing. The enabling processing will be described later with reference to FIG. 12. Note that in a situation where it is determined in step S700 that the Agile Multiband setting is enabled, it is assumed that the connection destination AP 101 has recognized that the MFP 100 can execute the function corresponding to Agile Multiband, and then the AP 101 and the MFP 100 are connected to each other.

In steps S701 to S704, the MFP 100 determines whether or not a condition for disabling the Agile Multiband setting is met. In the present embodiment, it is determined to set the Agile Multiband setting to disabled if any one of the following conditions (1) to (4) is met:
(1) If the MFP 100 executes a specific function premised upon a constant wireless connection;
(2) If it is detected that the MFP 100 is installed in a specific installation environment;
(3) If it is detected that the MFP 100 is in a state in which it is ready for transition to the power saving state; and
(4) If a user instruction to disable the Agile Multiband setting is accepted.

Here, the conditions (1) to (4) are described. The specific function indicated by the condition (1) is a function of performing, while receiving or transmitting data via the AP, processing related to the data, the function being unfavorably affected by the disconnection of the wireless connection to the AP. For example, it is, among the print functions of the MFP 100, a print function of printing a print job (print data) received via wireless communication through the AP. In such a print function, if AP switching by Agile Multiband occurs, the reception of the print job may be temporarily interrupted, which may adversely affect the printing operation. Also, if the MFP 100 simply ignores a connection destination change request by Agile Multiband, the wireless connection to the currently connected AP may be disconnected. In this case, the print job that is being received would end in a print failure. Accordingly, when executing such a print function, a more reliable printing operation can be guaranteed by changing the setting to a setting in which a change of the connection destination by Agile Multiband is not executed.

Note that examples of print function that corresponds to the specific function as described above include a print function (such as Cloud Print) in which a print job is received via a cloud. Of course, a print function (such as AirPrint) to perform printing upon receiving a print job from an external device such as a PC or a mobile terminal via a network (AP) may be included in the specific function. Also, the specific function is not limited to a print function. An example of the specific function is a scan function of scanning a document while transmitting scan data via an AP. If a buffer becomes full of scan data while communication is stopped due to AP switching, the scanning operation needs to be temporarily interrupted. Accordingly, it may be desirable to make a setting change so that a change of the connection destination by the Agile Multiband function is not allowed when such a scan function is to be executed stably.

Examples of the specific installation environment of the condition (2) include the following: (a) an installation environment in which the number of AP connectable to the MFP 100 is a predetermined number or less; and (b) an installation environment in which the number of electronic apparatuses connected to the AP 101 is a predetermined number or less. For example, if a predetermined number in the condition (a) is defined as 2, an installation environment in which there is no other APs that serve as connection candidates will be determined as the specific installation environment. Also, in the installation environment of the condition (b), it is estimated that the number of STAs is small, and congestion that would cause AP switching is rare. Representative examples of the specific installation environment as described above include an in-home installation environment, such as a work-at-home environment. When an STA is used in a house, it is unlikely that there are multiple APs in the house, and it is expected that AP connection destination change by Agile Multiband will hardly occur, but unnecessary power will be consumed to wait for a connection destination change request. Accordingly, if such a specific installation environment is detected, it is desirable to make a setting change so that a change of the connection destination by the Agile Multiband function is not allowed. Note that an installation environment can be set by a user via the operation screen of the MFP 100, for example. Also, it is also possible to automatically set an installation environment based on the operation environment obtained by the MFP 100. In the present embodiment, the setting value of the installation environment indicates, for example, HOME or OFFICE, and when the setting indicates HOME, it is determined that the installation environment is the specific installation environment (condition (2)).

The power saving state of the condition (3) is an operation state in which a STA transitions to reduce power consumption. When no operation such as printing is executed for a predetermined period of time, a STA (MFP 100 in this example) detects that it has entered a state in which it is ready for transition to the power saving state. The STA can maintain a wireless connection even in the power saving state, but communication is hardly performed in the power saving state, and thus the benefit of a better communication state by changing the AP is small. If a connection destination change request is received from an AP in such a power saving state, the STA will have to return from the power saving state to change the AP, resulting in extra power consumption. Therefore, if it is detected that the STA has entered to a state in which it is ready for transition to the power saving state, it is desirable to make a setting change so that a change of the connection destination by Agile Multiband is not allowed before the STA actually transitions to the power saving state.

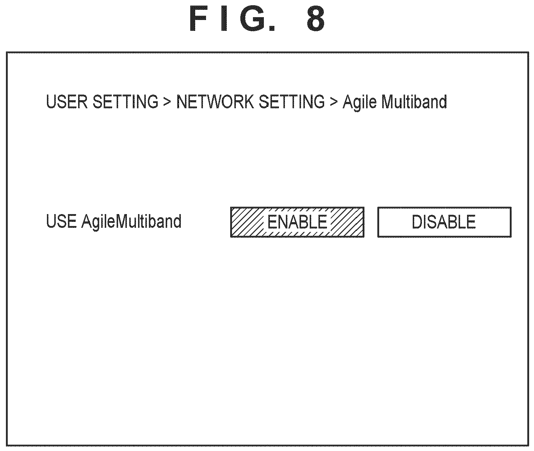

The condition (4) refers to a case where the Agile Multiband setting is set to disabled in response to a user operation via a predetermined setting screen of the MFP 100 or a user operation from an external device. For example, this is a case where the user sets "disabled" on the setting screen of the MFP 100 (described later with reference to FIG. 8).

In step S701 in FIG. 7, the CPU 212 checks whether or not a specific function premised upon a constant connection to a network is enabled (condition (1)). If it is determined by the CPU 212 that the specific function is enabled (YES in step S701), the processing advances to step S705, and if it is determined that the specific function is disabled (NO in step S701), the processing advances to step S702. Note that the state where "the specific function is enabled" is the state after the instruction to start the specific function has been given, but before data communication for performing the specific function via the AP is started. For example, it is the state after a print start instruction has been received from an external device or a user instruction for printing has been accepted from the operation screen, but before print data is obtained via the AP.

In step S702, the CPU 212 checks whether or not the installation environment of the MFP 100 is set to the specific installation environment (in the present example, HOME environment) (condition (2)). If it is confirmed by the CPU 212 that the installation environment is set to HOME environment (YES in step S702), the processing advances to step S705, and if it is confirmed that the installation environment is not set to HOME environment (NO in step S702), the processing advances to step S703. As described above, an installation environment is set by the user via the operation screen or automatically by the MFP 100.

In step S703, the CPU 212 checks whether or not the MFP 100 has entered a state in which it is ready for transition to the power saving state (condition (3)). If it is detected by the CPU 212 that the MFP 100 has entered the state in which it is ready for transition to the power saving state (YES in step S703), the processing advances to step S705, and if it is determined that the MFP 100 is not in the state in which it is ready for transition to the power saving state (NO in step S703), the processing advances to step S704.

In step S704, the CPU 212 checks whether or not the user has given an instruction to disable the Agile Multiband setting via a setting screen displayed on the operation display unit 220 of the MFP 100. FIG. 8 is a diagram showing an example of an Agile Multiband setting screen displayed on the operation display unit 220 of the MFP 100. There are buttons for setting the Agile Multiband setting to enabled and disabled, and the user can set the Agile Multiband setting to enabled or disabled. If it is confirmed by the CPU 212 that the Agile Multiband setting is disabled (YES in step S704), the processing advances to step S705. On the other hand, if it is confirmed that the Agile Multiband setting is enabled (NO in step S704), this processing is ended since the setting is substantially not changed. Note that the conditions for determining whether or not to disable Agile Multiband, which are exemplified by steps S701 to S704, are mainly related to states or settings where it is recommended not to change the AP connection destination. Of course, the determination conditions are not limited to the exemplified conditions, and other conditions may be added to the exemplified conditions, or any of the exemplified conditions may be excluded or replaced by another condition, for example.

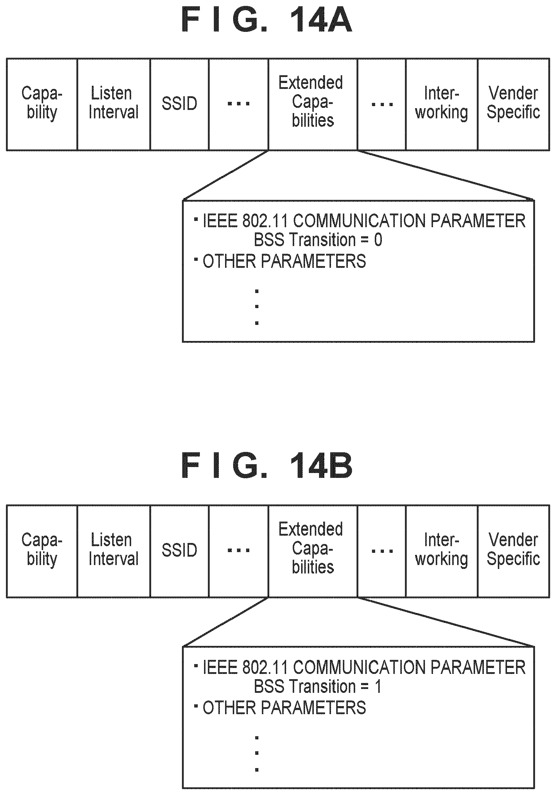

In step S705, the CPU 212 sets Agile Multiband to disabled. That is to say, the set state recorded in the non-volatile memory 215 is updated. Then, by the processing in steps S706 to S708, the CPU 212 causes the AP 101 to recognize that the MFP 100 does not support Agile Multiband. At the start of wireless connection with a STA, an AP that supports IEEE 802.11v sets whether or not the STA supports IEEE 802.11v (Agile Multiband) based on a notification from the STA and does not change this setting after the wireless connection is established. Therefore, in the processing in steps S706 to S708, the wireless connection between the MFP 100 and the AP 101 is disconnected once, and the MFP 100 serving a device that does not support Agile Multiband is reconnected to the AP 101. With this, the AP 101 recognizes the MFP 100 as a STA that does not support Agile Multiband, and Agile Multiband in the MFP 100 is disabled. First, in step S706, the CPU 212 disconnects the wireless connection with the AP 101. Then, in step S707, the CPU 212 creates data for an Association Request frame including information indicating that the MFP 100 does not support IEEE 802.11v, as a preparation for wireless reconnection. An Association Request frame will be described later with reference to FIGS. 14A and 14B after the description of the third embodiment. Thereafter, in step S708, the CPU 212 uses the data for the Association Request frame created in step S707 to perform processing for wirelessly reconnecting to the AP 101.

As described above, according to the present embodiment, in a state in which it is recommended not to perform destination change for a wireless connection to the AP101, the MFP 100 disconnects the wireless communication with the AP 101, gives a notification that it does not support IEEE 802. 11v, and reconnects to the AP 101. As a result, the AP 101 recognizes that the MFP 100 does not support IEEE 802.11v and will not transmit a request for changing the wireless connection destination to the MFP 100. In this way, the MFP 100 is not required to change the wireless connection, and thus the wireless connection between the MFP 100 and the AP 101 is no longer disconnected. For example, if disconnection of a wireless connection to the AP 101 and reconnection to another AP are performed by Agile Multiband while the MFP 100 is executing printing, printing will be interrupted and restarted, resulting in an increase in time to complete the printing. According to the present embodiment, such AP switching is prevented, and reliable printing operation is ensured. If the AP 101 recognizes that the MFP 100 does not support IEEE 802. 11v, transmission of a measurement request (request described in step S601) from the AP 101 to the MFP 100 is also prevented. Therefore, in the MFP 100, it is also possible to prevent measurement (AP search) in response to the measurement request, and a response to the measurement request (processing in step S603). This realizes effects that the processing load can be reduced, the power consumption can be reduced, and resources can be allocated to other processing.

The conditions for setting the Agile Multiband settings to disabled are not limited to the above-described conditions (1) to (4), and not all these conditions are requisites. The user may also be able to select the condition for setting the Agile Multiband setting to disabled, from among a plurality of conditions (in the description above, the conditions (1) to (4)). In the description above, the Agile Multiband setting is set to disabled when the environment setting is set to HOME, but some embodiments are not limited to this. For example, an AP is known that functions as two APs, namely, one at 2.4 GHz and the other at 5 GHz, even in an in-home installation environment. In such a case, it may be desirable that the function of changing the connection destination to realize switching to communication using the recommended one of the frequency bands of 2.4 GHz and 5 GHz be maintained.

### (Modification)

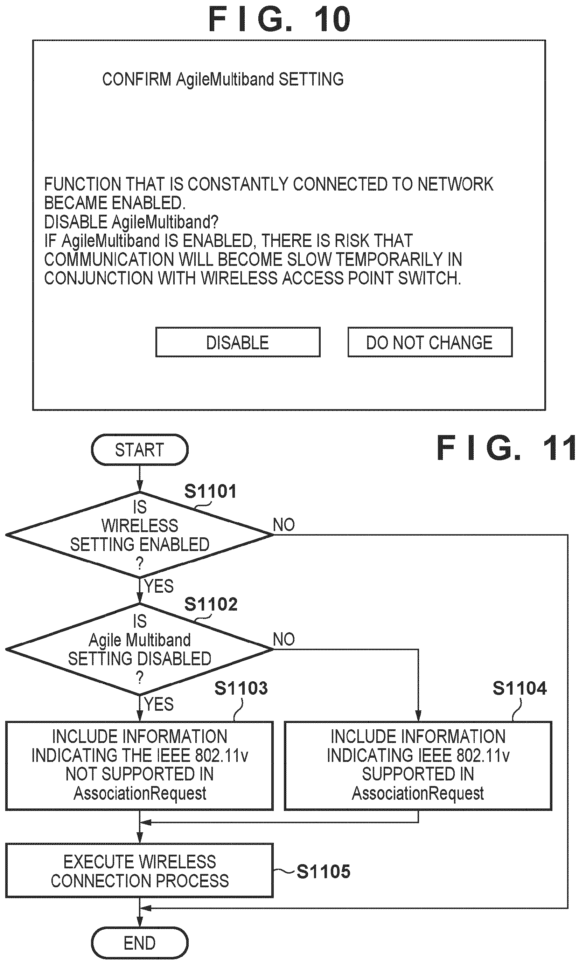

To the above-described conditions for changing the setting of the Agile Multiband function to disabled in steps S701 to S703, a condition that the user agrees to disable the function may be added. For example, if any one of the conditions of steps S701 to S703 is met (if it is recommended not to change the wireless connection), a confirmation screen (for example, the screen shown in FIG. 10) for asking the user whether or not to change the Agile Multiband setting to disabled is displayed on the operation display unit 220. Then, when the user selects "disabled" on the confirmation screen, the CPU 212 executes the above-described processing in steps S705 to S708 and disables Agile Multiband.

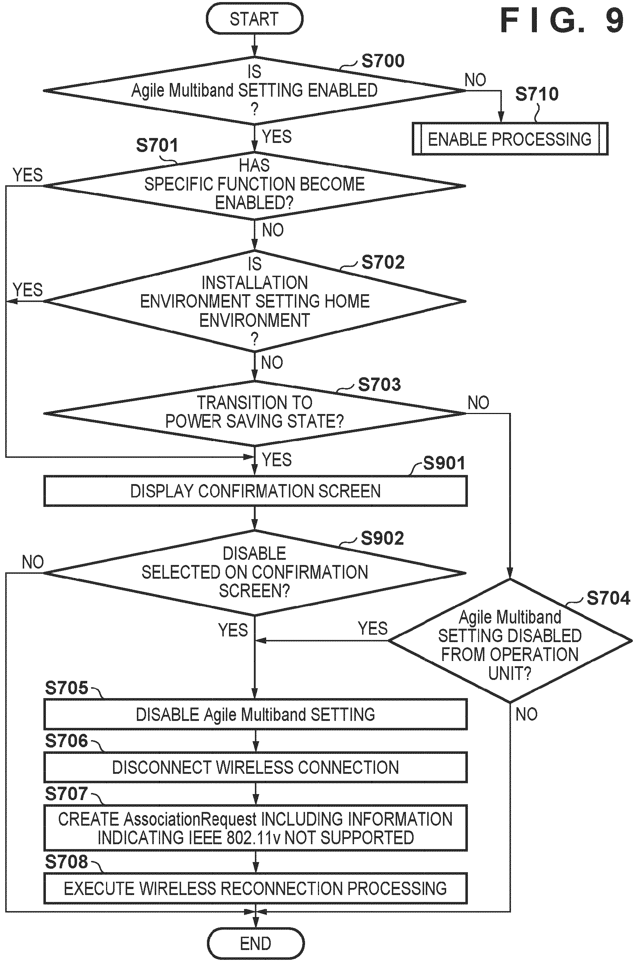

FIG. 9 is a flowchart illustrating operations for preventing acceptance of a connection destination change request according to the modification. In the processing shown in FIG. 9, processing for asking the user whether or not to disable the Agile Multiband setting with the operation unit is added to the processing shown in FIG. 7. The processing from step S700 to step S710 in FIG. 9 is the same as the processing from step S700 to step S710 in FIG. 7.

In the modification, if the determination of conditions (conditions (1) to (3)) of steps S701 to S703 is performed as in the above-described embodiment, and any one of the determination results shows "YES", the processing advances to step S901. However, if the determination result shows "YES" in step S704, it is clear that the user wants to disable Agile Multiband, so the processing advances to step S705, where the Agile Multiband setting is immediately set to disabled. In step S901, the CPU 212 displays a confirmation screen as shown in FIG. 10 to obtain user approval about setting of the Agile Multiband setting to disabled. FIG. 10 shows an example of a confirmation screen that is displayed when it is determined that a specific function premised upon a constant connection to a network is turned on (YES in step S701). The screen can notify the user of the fact that it is recommended to disable Agile Multiband and allows the user to select whether or not to set the Agile Multiband setting to disabled. On the screen, guidance is also displayed that shows which disadvantages are there if the Agile Multiband setting is left enabled.

Note that in the description above, when it is determined to disable the Agile Multiband setting based on the condition determination in steps S701 to S703, the processing of waiting for the user approval according to step S901 is sure to be executed, but some embodiments are not limited to this. If it is determined to disable the Agile Multiband setting based on a specific condition determination, the Agile Multiband setting may be disabled without waiting for a user approval. For example, when the MFP 100 transitions to the power saving state (YES in step S703), the processing (step S704) to set the Agile Multiband setting to disabled may also be executed without waiting for a user approval. Furthermore, even in the case of the same condition determination, it is possible to switch whether or not to wait for a user approval between a case where an instruction is received from the operation display unit 220 of the MFP 100 and a case where an instruction is received from an external device. For example, a configuration is also possible in which, in step S701, if an instruction to execute the print function is received via the operation display unit 220, the Agile Multiband setting is set to disabled after obtaining a user approval, and if the instruction is received from an external device, the Agile Multiband setting is set to disabled without waiting for a user approval. A configuration is also possible in which the user can select and set, on the operation display unit 220, the condition in which the Agile Multiband setting is disabled after obtaining a user approval (or the condition in which the Agile Multiband setting is disabled without waiting for the user approval). Also, in step S901, a user instruction to set the Agile Multiband setting to disabled or enabled may be accepted from an external device. In this case, a predetermined application running on the external device displays a confirmation screen as shown in FIG. 10 on the external device and notifies the MFP 100 of the user instruction.

In S902, the CPU 212 determines whether or not the user has selected to disable the Agile Multiband setting on the confirmation screen displayed in step S901. If it is determined by the CPU 212 that the user has selected to disable the Agile Multiband setting (YES in step S902), the processing advances to step S705 as the user has approved to set the Agile Multiband setting to disabled. The operations after steps S705 onwards are the same as in the above-described embodiment, and the Agile Multiband setting is set to disabled and the MFP 100, that is, the electronic apparatus that does not support IEEE 802.11v, performs wireless reconnection processing. If it is determined that the user has selected not to disable the Agile Multiband setting in step S902 (NO in step S902), that is, the user has not given approval, this processing is ended.

Note that in step S902, the execution of the specific function and the transition to the power saving state are stopped until the user completes selection on the confirmation screen, and thus if the user does not notice the confirmation screen, the user may not be able to execute the functions of the MFP 100 for a long time. Therefore, if no setting instruction is given by the user even after a predetermined time has elapsed after the confirmation screen was displayed, it may be assumed that to disable is not selected (NO in step S902), and this processing may be ended. In this case, the user may be allowed to recognize the elapse of the predetermined period by, for example, display of the remaining time or display of a progress bar. If to disable is not selected on the confirmation screen (NO in step S902), the confirmation screen will be displayed each time the processing of FIG. 9 is executed as long as any one of the conditions of steps S701 to S703 is met. To prevent such a situation, the processing of FIG. 9 may be started at a predetermined interval after it is determined that to disable has not been selected on the confirmation screen. Also, it is possible not to use the determination condition based on which step S901 was executed (the condition in which YES was determined in steps S701 to S703) for a predetermined period of time. For example, if a confirmation screen is displayed due to the specific function being enabled (YES in step S701), step S701 may be skipped for a predetermined period of time after it is determined that to disable has not been selected on the confirmation screen, or until the enabled specific function is complete.

As described above, according to the present embodiment and the modification thereof, it is possible to perform control such that an AP to serve as the connection destination is changed as appropriate. Note that the above-described embodiment has described a case where AP switching is suppressed, taking the specific function and the power saving state (sleep) premised upon a constant connection to a network, as examples. However, the technology of the present embodiment may be applicable to a case where it is determined that the MFP 100 should not disconnect the connection to the AP to perform AP switching, other than these cases.

In the processing described with reference to FIGS. 7 and 9, if a predetermined condition is met while the Agile Multiband setting of the MFP 100 is enabled, the MFP 100 is brought into a state in which it no longer supports IEEE 802.11v, and reconnects to the AP, thereby disabling Agile Multiband. The following will describe processing of determining, when the MFP 100 is activated, whether or not a connection destination change request can be accepted from the AP 101 based on whether the Agile Multiband setting is enabled or disabled.

FIG. 11 is a flowchart showing the processing of determining, when the MFP 100 is activated, whether or not to accept a connection destination change request from the AP 101 using the Agile Multiband setting. The processing shown in the flowchart is realized by the CPU 212 included in the MFP 100 reading, onto the RAM 214, various programs stored in the memory, such as the ROM 213 included in the MFP 100, and executing it. The ROM 213, the RAM 214, and the like are examples of computer-readable storage media.

First, in step S1101, the CPU 212 determines whether or not the wireless setting of the MFP 100 is enabled. If the wireless setting is enabled, the MFP 100 establishes a connection to a wireless network via an AP. If it is determined by the CPU 212 that the wireless setting is enabled (YES in step S1101), the processing advances to step S1102, and if it is determined that the wireless setting is disabled (NO in step S1101), this processing is ended. In step S1102, the CPU 212 determines whether or not the Agile Multiband setting of the MFP 100 is disabled. Specifically, the CPU 212 performs the determination in step S1102 by reading a setting value representing whether the Agile Multiband setting is enabled or disabled, the setting value being stored in the non-volatile memory 215. If it is determined by the CPU 212 that the Agile Multiband setting is disabled (YES in step S1 102), the processing advances to step S1 103, and if it is determined that the Agile Multiband setting is enabled (NO in S1102), the processing advances to step S1104.

In step S1103, similarly to step S707, the CPU 212 creates data for an Association Request frame including information indicating that the MFP 100 does not support IEEE 802.11v, as a preparation for wireless reconnection. On the other hand, in step S1104, the CPU 212 creates data for an Association Request frame including information indicating that the MFP 100 supports IEEE 802. 11v, as a preparation for wireless reconnection. Then, in step S1105, the CPU 212 uses the data for the Association Request frame created in step S1103 or step S1104 to perform processing for connecting to an AP. As a result, if the Association Request frame including the information indicating that the MFP 100 does not support IEEE 802.11v is created in step S1103, the MFP 100, the electronic apparatus that does not support (is not compatible with) the Agile Multiband function will connect to the AP. On the other hand, if the Association Request frame including information indicating that the MFP 100 supports IEEE 802. 11v is created in step S1104, the electronic apparatus that has the Agile Multiband function will connect to the AP. After the processing in step S1105, the processing advances to step S700 in FIG. 7 or FIG. 9, where the corresponding processing in FIG. 7 or FIG. 9 is executed.

As described above, when the MFP 100 is activated, the current setting state as to whether the Agile Multiband setting is enabled or disabled is checked. This prevents, for example, the MFP 100 disposed in the HOME environment from unnecessarily enabling the Agile Multiband function.

The following will describe processing of switching the Agile Multiband function from disabled to enabled. In the present embodiment, processing is described in which the MFP 100 set so as not to accept a connection destination change request from the AP 101 is caused to start accepting a connection destination change request from the AP 101 in response to a predetermined condition being met.

FIG. 12 shows a flowchart of enabling processing described above in step S710. This processing is processing in which if the MFP 100 is caused to start accepting a connection destination change request from the AP 101, in response to the setting and state of the MFP 100 meeting a predetermined condition. The processing shown in FIG. 12 is realized by the CPU 212 included in the MFP 100 reading, onto the RAM 214, various programs stored in the memory, such as the ROM 213 included in the MFP 100, and executing it.

In steps S1201 to S1204, the MFP 100 determines whether or not a predetermined condition for changing the Agile Multiband setting from disabled to enabled is met. In the present example, based on determination results regarding the above-described conditions (1) to (4), it is determined that a predetermined condition for changing the Agile Multiband setting from disabled to enabled is met. In step S1201, the CPU 212 checks whether or not the user has operated the operation display unit 220 of the MFP 100 to give an instruction to change the Agile Multiband setting to enabled. For example, the CPU 212 displays the setting screen shown in FIG. 8 on the operation display unit 220 and prompts the user to select enabled or disabled for the Agile Multiband setting. If it is determined by the CPU 212 that an instruction to enable the Agile Multiband setting has been given (YES in step S1201), the processing advances to step S1207 and the Agile Multiband setting is immediately switched to enabled. On the other hand, if it is determined that an instruction to enable the Agile Multiband setting has not been given (NO in step S1201), the processing advances to step S1202.

In step S1202, the CPU 212 checks whether or not the specific function (condition (1)) premised upon a constant connection to a network is disabled. If it is determined by the CPU 212 that the specific function is disabled (YES in step S1202), the processing advances to step S1203, and if it is determined that the specific function is enabled (NO in S1202), this processing is ended. In step S 1203, the CPU 212 checks whether or not the installation environment of the MFP 100 is set to an environment other than the specific installation environment (other than the HOME environment in the present example). If it is determined by the CPU 212 that the installation environment is set to an environment other than the HOME environment (YES in step S1203), the processing advances to step S1204, and if it is determined that the installation environment is set to the HOME environment (NO in step S1203), this processing is ended. In step S1204, the CPU 212 checks whether or not the power state of the MFP 100 is the power saving state. Here, a situation in which the power state is the power saving state includes a state in which the MFP 100 is detected to be ready for transition to the power saving state. If it is detected by the CPU 212 that the MFP 100 is in a non-power saving state (YES in step S1204), the processing advances to step S1205, and if it is determined that the MFP 100 is in the power saving state (NO in step S1204), this processing is ended.

The condition determinations executed in steps S1201 to S1204 above are mainly determinations relating to states and settings that do not cause any problem even if an AP is switched. Of course, the determination conditions for enabling the Agile Multiband settings are not limited to the above-described conditions, and another condition may be added to these conditions, or any of them may be omitted. In addition, a configuration is also possible in which the user can select, from among multiple conditions, a determination condition for enabling the Agile Multiband setting.

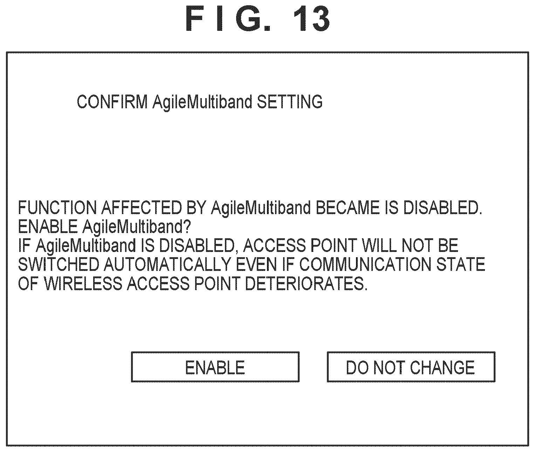

In step S1205, the CPU 212 displays a confirmation screen as shown in FIG. 13 on the operation display unit 220. The screen shown in FIG. 13 is an example of the confirmation screen displayed when the condition determination results in steps S1202 to S1204 all show YES, and the function that is affected by the AP switching through Agile Multiband is disabled. The confirmation screen notifies the user of the fact that it is recommended to enable the Agile Multiband setting and prompts the user to select whether or not to enable the Agile Multiband setting. The confirmation screen also displays a guidance that shows disadvantages caused when the Agile Multiband setting is left disabled, and/or advantages caused when the Agile Multiband setting is enabled. In step S1206, the CPU 212 determines whether or not the user has selected to enable the Agile Multiband setting on the displayed confirmation screen. If it is determined by the CPU 212 that the user has selected (approved) to enable the Agile Multiband setting (YES in step S1206), the processing advances to step S1207. If it is determined by the CPU 212 that the user has selected not to enable the Agile Multiband setting, that is, the user has not approved to enable the Agile Multiband setting (NO in step S1206), this processing is ended.

In step S1207, the CPU 212 enables the Agile Multiband setting. That is to say, the setting state recorded in the non-volatile memory 215 is updated.

In step S1208, the CPU 212 disconnects the wireless connection to the AP 101. The CPU 212 creates data for an Association Request frame including information indicating that the MFP 100 supports IEEE 802.11v. Then, in step S1210, the CPU 212 uses the data for the Association Request frame created in step S1209 to perform processing for wirelessly reconnecting to the AP 101. In this way, the MFP 100, serving as a device that supports IEEE 802. 11v, is wirelessly connected to the AP 101, and the Agile Multiband in the MFP 100 is enabled. Note that also in confirmation of approval in step S1205, a configuration in which, for example, a time limit until approval is confirmed is provided similarly to in step S902 is applicable. A configuration is also possible in which the processing automatically advances to step S1207, where processing for enabling the Agile Multiband is performed, without performing display in step S1205 and acquiring the user's confirmation.

Thus, according to the MFP 100 of the present embodiment, it is possible to inform the AP 101 of the fact that it supports IEEE 802.11v (that the wireless connection can be changed), when there is no problem with AP switching. Therefore, when the AP 101 transmits a connection destination change request to the MFP 100, the MFP100 can change the wireless connection and can be automatically connected to a suitable AP by Agile Multiband.

Note that the above-described embodiment has described a case where AP switching is enabled, taking the specific function and the power saving state (sleep) premised upon a constant connection to a network, as examples. However, the technology of the present embodiment may be applicable to a case where it is determined that the MFP 100 can preferably disconnect the connection to the AP to perform AP switching, other than these cases.

FIGS. 14A and 14B show examples of the body parts of Association Request frame data created and transmitted during a wireless connection to an AP in the embodiments. A value of BSS Transition included in Extended Capability is set according to whether or not IEEE 802.11v is supported. Also, this frame data contains, in addition to the parameter, various parameters for starting wireless communication. FIG. 14A shows an example of the Association Request frame data when IEEE 802.11v is not supported. IEEE 802.11 communication parameter includes data with the value of BSS Transition is 0. This indicates that IEEE 802.11v is not supported. FIG. 14B shows an example of the Association Request frame data when IEEE 802.11v is supported. IEEE 802.11 communication parameter includes data with the value of BSS Transition is 1. This indicates that IEEE 802. 11v is supported.

### Other Embodiments

The forgoing various controls described as being performed by the MFP 100 may be performed by a single piece of hardware, or by multiple pieces of hardware (for example, multiple processors or circuits) sharing processing to control the entire device.

Although some embodiments have been described in detail based on suitable embodiments thereof, some embodiments are not limited to these specific embodiments, and various forms are also included in some embodiments to the extent that they do not depart from the gist of this disclosure. Furthermore, each of the above-described embodiments is only one embodiment of the disclosure, and it is possible to combine the embodiments as appropriate.

In the above-described embodiments, the case where the present disclosure is applied to the MFP 100 was taken as an example, but the some embodiments are not limited to this example and can be applied to any device that is applicable to any wireless device that functions as a STA capable of performing processing in accordance with a connection destination change request from an AP. In other words, the present disclosure is applicable to personal computers, PDAs, tablet terminals, cellphone terminals such as smartphones, music players, game machines, e-book readers, smart watches, and various measurement devices (sensor devices) such as thermometers and hygrometers. The present disclosure is also applicable to digital cameras (including still cameras, video cameras, network cameras, and security cameras), printers, scanners, and drones. The present disclosure is also applicable to video output devices, audio output devices (e.g., smart speakers), media streaming players, and wireless LAN child devices (adapters) that can be connected to USB terminals or LAN cable terminals. Video output devices include, for example, a device that acquires (downloads) video on the Internet identified by a URL instructed from an electronic apparatus and outputs it to a display device connected via a video output terminal such as HDMI^{®}, thereby realizing streaming playback on the display device and realizing mirroring display (display in which the content displayed on an electronic apparatus is also displayed on a display device). Video output devices also include media players, such as televisions, hard disk recorders, Blu-ray recorders, and DVD recorders, head-mounted displays, projectors, televisions, display devices (monitors), and signage devices. The present disclosure is also applicable to Wi-Fi connectable devices, that is, so-called smart home appliances, such as air conditioners, refrigerators, washing machines, vacuum cleaners, ovens, microwave ovens, lighting fixtures, heating devices, and cooling devices.

### Other Embodiments

Embodiment(s) of the present invention can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. An electronic apparatus (100) comprising:
a receiving means configured to receive a change request of an access point serving as a connection destination from an access point (101);
a setting means configured to set processing based on the change request from the access point (101) to enabled or disabled; and
a control means configured to, in response to the setting means setting the processing to disabled, perform control such that a connection to a connected access point (101) is disconnected, the access point (101) is notified of information indicating that the electronic apparatus (100) does not support the change request, and a reconnection to the access point (101) is established.

2. The electronic apparatus (100) according to claim 1,
wherein the setting means sets the processing based on the change request to disabled in accordance with an instruction from a user.

3. The electronic apparatus (100) according to claim 1 or 2,
wherein the setting means sets the processing based on the change request from the access point (101) to disabled if a predetermined condition is met.

4. The electronic apparatus (100) according to claim 3,
wherein the predetermined condition includes at least one of a condition where a specific function premised upon a constant connection to a network is enabled, a condition where the electronic apparatus (100) is installed in a specific installation environment, and a condition where a state of transitioning to a power saving state is reached, and
if at least one of the conditions included in the predetermined condition is met, the setting means sets the processing based on the change request from the access point (101) to disabled.

5. The electronic apparatus (100) according to claim 4,
wherein the specific function includes at least one of a print function of printing print data received via the access point (101) and a scan function of scanning a document while transmitting scan data via the access point (101).

6. The electronic apparatus (100) according to any one of claims 4 or 5,
wherein the specific installation environment includes an installation environment in which the number of access points (101, 102) connectable to the electronic apparatus (100) is a predetermined number or less, or an installation environment in which the number of apparatuses connected to the access points is a predetermined number or less.

7. The electronic apparatus (100) according to any one of claims 3 to 6,
wherein, if the predetermined condition is met, the setting means sets the processing based on the change request to disabled after obtaining an approval from a user.

8. The electronic apparatus (100) according to any one of claims 1 to 7,
wherein in response to the setting means setting the processing to enabled, the control means performs control such that a connection to the connected access point (101) is disconnected, the access point (101) is notified of information indicating that the electronic apparatus (100) supports the change request, and a reconnection to the access point (101) is established.

9. The electronic apparatus (100) according to any one of claims 1 to 8,
wherein, when the processing is set to enabled by the setting means and the change request is received by the receiving means from a connected access point (101), the control means performs control such that a connection destination is changed to another access point (102) indicated by the information included in the change request.

10. The electronic apparatus (100) according to any one of claims 1 to 9,
wherein the electronic apparatus (100) is an apparatus capable of performing perform operations compatible with at least one of orthogonal frequency-division multiple access (OFDMA) and target wake time (TWT).

11. The electronic apparatus (100) according to any one of claim 1 to 10,
wherein the electronic apparatus (100) is an apparatus capable of performing an operation compatible with IEEE 802.11ax.

12. The electronic apparatus (100) according to any one of claim 1 to 11,
wherein, when performing control to change a connection destination in accordance with the change request, the control means performs control such that a connection destination is changed to an access point (102) whose frequency band is a 6 GHz band.

13. An electronic apparatus, comprising
a receiving means configured to receive a change request of an access point serving as a connection destination from an access point (101);
a setting means configured to set processing based on the change request from the access point (101) to enabled or disabled; and
a control means configured to, in response to the setting means setting the processing to enabled, perform control such that a connection to a connected access point (101) is disconnected, the access point (101) is notified of information indicating that the electronic apparatus (100) supports the change request, and a reconnection to the access point (101) is established.

14. A method for controlling an electronic apparatus (100), comprising:
receiving a change request of an access point serving as a connection destination from an access point (101);
setting processing based on the change request from the access point (101) to enabled or disabled; and
in response to the setting the processing to disabled, performing control such that the electronic apparatus (100) disconnects a connection to a connected access point (101), notifies the access point of information indicating that the electronic apparatus (100) does not support the change request, and reconnects to the access point (101).

15. A method for controlling an electronic apparatus, comprising:
receiving a change request of an access point serving as a connection destination from an access point (101);
setting processing based on the change request from the access point (101) to enabled or disabled; and
in response to the setting the processing to enabled, performing control such that the electronic apparatus (100) disconnects a connection to a connected access point (101), notifies access point (101) of information indicating that the electronic apparatus (100) supports the change request, and reconnects to the access point (101).

16. A non-transitory computer-readable storage medium storing a program which when loaded into a computer and executed allows the computer to function as an electronic apparatus as claimed in any one of claims 1 to 13.

17. A program which when loaded into a computer and executed allows the computer to function as an electronic apparatus as claimed in any one of claims 1 to 13.
